(19) Europäisches Patentamt
European Patent Office
Office européen des brevets

(11) **EP 2 889 842 A1**

(12) **EUROPEAN PATENT APPLICATION**

(43) Date of publication:
**01.07.2015 Bulletin 2015/27**

(51) Int Cl.:
***G06T 7/20*** *(2006.01)*

(21) Application number: **13461573.1**

(22) Date of filing: **31.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Patents Factory Ltd. Sp. z o.o.**
**65-043 Zielona Gora (PL)**

(72) Inventors:
• **Paczkowski, Jacek**
**65-043 Zielona Gora (PL)**

• **Nalewa, Tomasz**
**65-043 Zielona Gora (PL)**

(74) Representative: **Pawlowski, Adam**
**Eupatent.PL**
**ul. Zeligowskiego 3/5**
**90-752 Lodz (PL)**

Remarks:
Amended claims in accordance with Rule 137(2) EPC.

(54) **A method for estimating dynamics of motion in a video image**

(57) A method for estimating dynamics of motion in a video image, comprising the steps of: consecutively reading (201) source frames of the video image; for each source frame, generating (202) a moving object mask, the moving object mask indicating objects which changed position between the frame and at least one previous frame; selecting a current frame (C) for which motion is to be estimated; combining (203) moving object masks for at least two frames (P1, P2) which are not later in the stream than the current frame to obtain a past mask (P); combining (204) moving object masks for at least two frames (F1, F2) which are not earlier in the stream than the current frame to obtain a future mask (F); estimating speed of a moving object as a function of the area of the object on the moving object mask for the current frame (C) and the area of the object on the past mask (P) or on the future mask (F).

Fig. 1

Fig. 2

EP 2 889 842 A1

**Description**

The present invention relates to estimating dynamics of motion in a video image.

There are many situations where it is necessary to estimate motion of objects on a video image. These situations include monitoring road traffic, surveillance of a protected area, monitoring of activity of consumers at a shopping centre, automatic aiming systems for weapons etc. In such situations it would be advantageous to provide a method that can effectively estimate at least the speed and acceleration of an object, to draw further conclusions about that object - for example, whether a vehicle exceeds a speed limit, whether an intruder behaves suspiciously, whether a customer is interested in a particular area of the shopping centre, or whether the aim is moving so that positioning of weapon shall be adjusted.

A US patent application US2013294643 presents a computer-implemented method for determining the speed of a motor vehicle in a vehicle speed detection system. The method can include receiving a plurality of images of a motor vehicle travelling on a road, each of the images being separated in time by a known interval; determining, for each of at least two of the images, a point of contact where a same tire of the vehicle contacts a surface of the road based, in part, on one or more identified features of the vehicle in one or more of the plurality of images; and using the points of contact and the time interval separations to calculate a speed at which the vehicle is travelling on the road.

It would be advantageous to provide an efficient method for estimating dynamics of motion of an object, in particular in a 3D space based on a video image captured from two video cameras, which will be effective in terms of resources necessary to implement that method.

The object of the invention is a method for estimating dynamics of motion in a video image, comprising the steps of: consecutively reading source frames of the video image; for each source frame, generating a moving object mask, the moving object mask indicating objects which changed position between the frame and at least one previous frame; selecting a current frame (C) for which motion is to be estimated; combining moving object masks for at least two frames (P1, P2) which are not later in the stream than the current frame to obtain a past mask (P); combining moving object masks for at least two frames (F1, F2) which are not earlier in the stream than the current frame to obtain a future mask (P); estimating speed of a moving object as a function of the area of the object on the moving object mask for the current frame (C) and the area of the object on the past mask (P) or on the future mask (F).

Preferably, speed ($V_F$) is calculated on the basis of the future mask (F) as

$$V_F = \frac{P_F - P_C}{P_C}$$

wherein
$P_F$ is the area of the object on a future mask F
$P_C$ is the area of the object on a current mask C

Preferably, speed ($V_P$) is calculated on the basis of the past mask (P) as

$$V_P = \frac{P_P - P_C}{P_C}$$

wherein
$P_P$ is the area of the object on a past mask P
$P_C$ is the area of the object on a current mask C

Preferably, the method further comprises estimating acceleration of a moving object as a function of the area of the object on the future mask (F) and on the past mask (F).

Preferably, acceleration is calculated as a quotient of the area ($P_F$) of the object on the future mask (F) and the area ($P_P$) of the object on the past mask (P).

Preferably, the speed is corrected by a correction factor $\lambda$ calculated as a quotient of the areas of the object on two consecutive frames ($P_{K+1}$, $P_K$).

Preferably, the speed is corrected by a proportionality coefficient ks calculated for an object moving with a known speed.

The object of the invention is a computer program comprising program code means for performing all the steps of the above-discussed method when said program is run on a computer, as well as a computer readable medium storing computer-executable instructions performing all the steps of the above-described method when executed on a computer.

Another object of the invention is a system for estimating dynamics of motion in a video image, the system comprising: a source signal input for receiving a source video signal comprising source video frames, a moving object mask generator connected to the source signal input to generate a moving object mask for each source frame, the moving object mask indicating objects which changed position between the frame and at least one previous frame; a series of buffers arranged as a shift register connected to the output of the moving object mask generator, each buffer configured to store a moving object mask, wherein a non-last buffer is configured to store a current frame (C); a first adder for combining moving object masks for at least two frames (P1, P2) which are not later in the stream than the current frame to obtain a past mask (P); a second adder for combining moving object masks for at least two frames (F1, F2) which are not earlier in the stream than the current frame to obtain a future mask (P); an motion estimator configured to estimate the speed of a moving object as a function of the area of the object on the moving object mask for the current frame (C) and the area of the object on the past mask (P) or on the future mask (F).

Preferably, the motion estimator is further configured to estimate acceleration of the moving object as a function of the area of the object on the future mask (F) and on the past mask (F).

The method and system of the invention allows to efficiently estimate dynamics of motion of an object in a video image, such as speed and acceleration.

The method and system are presented by means of example embodiment on a drawing, in which:

Fig. 1 shows a structure of a system for estimating motion;
Fig. 2 shows a method for estimating motion;
Fig. 3 shows examples of moving object masks used in the method.

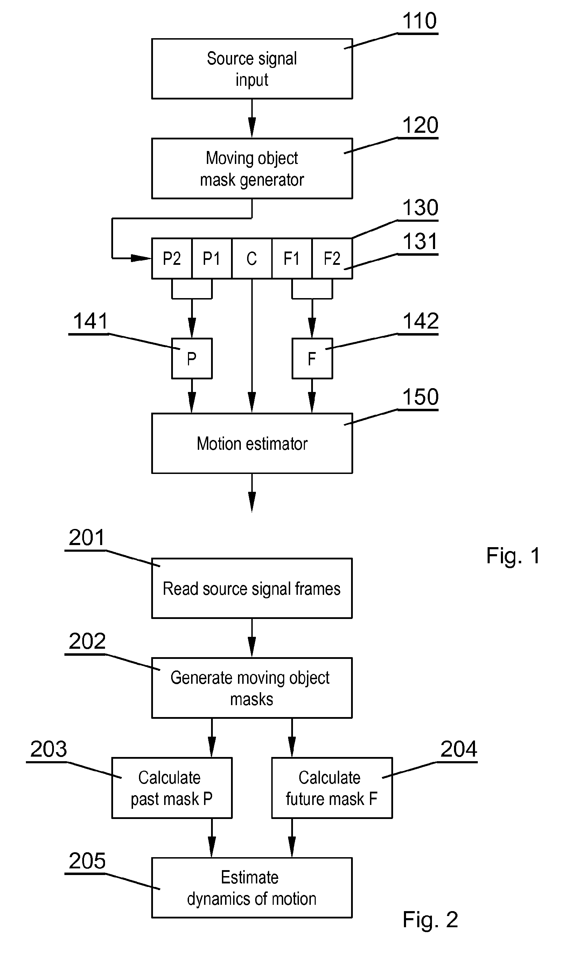

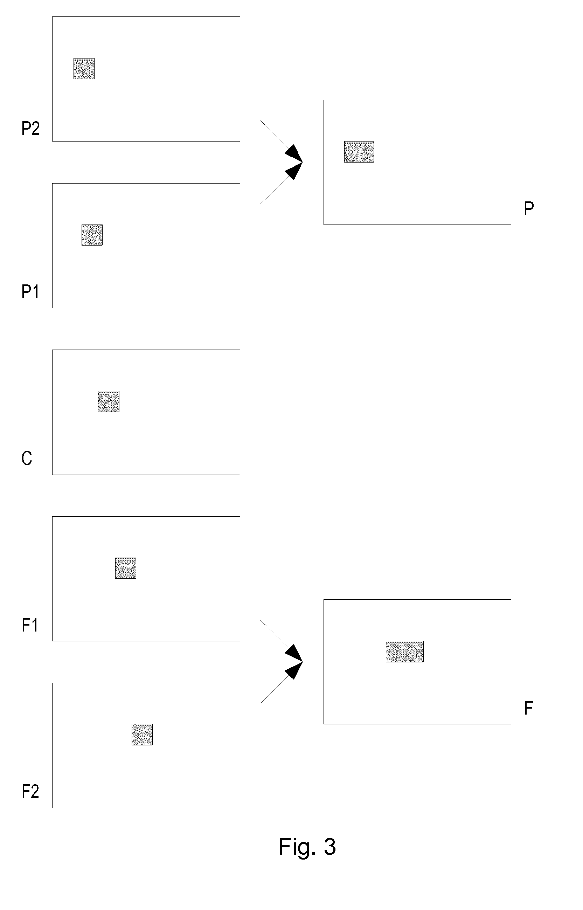

The structure of the system for visualizing motion on a video image is shown in Fig. 1. The system comprises a source video signal input 110, such as a video camera or a pre-recorded signal read from a storage device. Consecutive frames of the source signal are input to a moving object mask generator 120 which compares each frame with at least one frame which is previous in the video sequence and generates a mask indicating moving objects present in the particular frame. Therefore, the mask may comprise the contents of the frame that correspond to the objects which changed their position and blank content outside the moving objects. The generated masks are input to a series of a plurality of buffers 131 arranged as a shift register 130. Each buffer 131 is configured to store the moving object mask for one frame of the video signal. In the presented embodiment, the shift register 130 stores a series of masks for 5 last frames of the source video signal. The central buffer stores a central mask C, the buffers preceding it store masks of past frames P1, P2 and the buffers following it store masks of future frames F1, F2, as shown in Fig. 3. The masks of past frames P1, P2 are combined in an adder 141 into a single past mask P, such as shown in Fig. 3, by an image combiner, wherein the contents of the masks P1, P2 are added. The masks of future frames F1, F2 are combined in an adder 142 into a single future mask F, such as shown in Fig. 3, by an image combiner, wherein the contents of the masks F1, F2 are added. The central (current) mask C, the past mask P and the future mask F are input to a motion estimator 150, which estimates motion of objects in the following manner.

The speed of the object is estimated on the basis of a quotient of:

$$V_F = \frac{P_F - P_C}{P_C}$$

$$V_P = \frac{P_P - P_C}{P_C}$$

wherein:

$V_F$ is a speed calculated for future frames
$V_P$ is a speed calculated for future frames
$P_F$ is the area of the object on a future mask F
$P_P$ is the area of the object on a past mask P
$P_C$ is the area of the object on a current mask C

The higher the speed of the object, the larger the resulting area on the future F or past P mask. When the object moves with very little speed, its area on the future F or past P mask is close to its the area on the current mask C and therefore the resulting speed is close to zero.

The acceleration of the object is estimated on the basis of a quotient of the size of the area corresponding to the moving object on the future mask F and on the past mask P:

$$a = \frac{P_F}{P_P}$$

If the object moves with a constant speed, the quotient is equal to 1. If the object accelerates, its area on the future mask F is larger than its area on the past mask. If the object decelerates, its area on the future mask F is smaller than its area on the past mask.

Therefore, the method for estimating dynamics of motion proceeds as shown in Fig. 2. In step 201, the source frames of the video image are consecutively read. For each source frame, in step 202 a moving object mask is generated. In step 203 the moving object masks for frames preceding the current frame are combined to obtain a past mask (P) and in step 204 the moving object masks for frames following the current frame are combined to obtain a future mask (F). Then, in step 205 the dynamics of motion are estimated as discussed above.

The embodiment discussed above presents calculations based on masks for five consecutive frames: one central frame C, two past frames P and two future frames F. In a simplest embodiment, the method can be implemented by using only three frames, wherein a sum of the masks for the first two frames defines a future mask F, the sum of the masks for the last two frames defines a past mask P and the mask for the central frame C is common for both the past and future masks.

Of course, one mask may comprise a plurality of objects. In such a case the objects can be analyzed independently on the basis of the same masks.

The above calculations are accurate for an object moving such that its distance from the camera is the same, i.e. the object does not change its size in consecutive frames.

In case the distance of the object from the camera changes, a correction factor should be used. The correction factor $\lambda$ can be calculated as a quotient of the size of the object on two consecutive frames $P_K$ and $P_{K+1}$:

$$\lambda = \frac{P_{K+1}}{P_K}$$

The corrected speed equals to

$$V_F^* = \frac{V_F}{\lambda}$$

$$V_P^* = V_P * \lambda$$

Wherein $V_F$ and $V_P$ are speeds calculated before the correction.

The corrected acceleration in time t can be calculated as

$$a = \frac{V_F - V_P}{t}$$

The speed and acceleration as calculated above are relative numbers which are proportional to the real speed and acceleration values. In order to convert them to real values, the system shall be calibrated.

For example, in case of a traffic monitoring system, wherein a camera for measuring the speed of vehicles is positioned over a side of a road perpendicularly to the road, the system can be calibrated as follows. A speed proportionality coefficient ks can be calculated by filming a vehicle travelling at a known speed $V_{ref}$:

$$ks = \frac{V_{ref}}{V_1^*}$$

Wherein V1* is a speed calculated as described above, on the basis of quotient of areas of masks.

Then, the real speed of a moving object can be calculated as:

$$V_P^{**} = ks * V_P^*$$

$$V_F^{**} = ks * V_F^*$$

The real acceleration is equal to

$$a = \frac{(V_F^{**} - V_P^{**}) * fr}{N}$$

wherein:

fr is the frame rate (number of frames per second)
N is the number of past or previous frames which were combined to a past or future mask (in the above example N = 2)

It can be easily recognized, by one skilled in the art, that the aforementioned method for estimating dynamics of motion in a video image may be performed and/or controlled by one or more computer programs. Such computer programs are typically executed by utilizing the computing resources of an encoder or decoder device. The computer programs can be stored in a non-volatile memory (or otherwise a non-transitory computer storage medium), for example a flash memory or in a volatile memory, for example RAM and are executed by a processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

In addition, any combination of the features of the appended claims is envisaged in the present application.

## Claims

1. A method for estimating dynamics of motion in a video image, comprising the steps of:

   - consecutively reading (201) source frames of the video image;
   - for each source frame, generating (202) a moving object mask, the moving object mask indicating objects which changed position between the frame and at least one previous frame;
   - selecting a current frame (C) for which motion is to be estimated;
   - combining (203) moving object masks for at least two frames (P1, P2) which are not later in the stream than the current frame to obtain a past mask (P);
   - combining (204) moving object masks for at least two frames (F1, F2) which are not earlier in the stream than the current frame to obtain a future mask (F);
   - estimating speed of a moving object as a function of the area of the object on the moving object mask for the current frame (C) and the area of the object on the past mask (P) or on the future mask (F).

2. The method according to claim 1, wherein speed ($V_F$) is calculated on the basis of the future mask (F) as

$$V_F = \frac{P_F - P_C}{P_C}$$

   wherein
   $P_F$ is the area of the object on a future mask F
   $P_C$ is the area of the object on a current mask C

3. The method according to claim 1 or 2, wherein speed ($V_P$) is calculated on the basis of the past mask (P) as

$$V_P = \frac{P_P - P_C}{P_C}$$

   wherein
   $P_P$ is the area of the object on a past mask P
   $P_C$ is the area of the object on a current mask C

4. The method according to any of previous claims, further comprising estimating acceleration of a moving object as a function of the area of the object on the future mask (F) and on the past mask (F).

5. The method according to claim 4, wherein acceleration is calculated as a quotient of the area ($P_F$) of the object on the future mask (F) and the area ($P_P$) of the object on the past mask (P).

6. The method according to any of previous claims, wherein the speed is corrected by a correction factor $\lambda$ calculated as a quotient of the areas of the object on two consecutive frames ($P_{K+1}$, $P_k$).

7. The method according to any of previous claims, wherein the speed is corrected by a proportionality coefficient ks calculated for an object moving with a known speed.

8. A computer program comprising program code means for performing all the steps of the method according to any of claims 1-7 when said program is run on a computer.

9. A computer readable medium storing computer-executable instructions performing all the steps of the method according to any of claims 1-7 when executed on a computer.

10. A system for estimating dynamics of motion in a video image, the system comprising:

    - a source signal input (110) for receiving a source video signal comprising source video frames,
    - a moving object mask generator (120) connected to the source signal input to generate a moving object mask for each source frame, the moving object mask indicating objects which changed position between the frame and at least one previous frame;
    - a series of buffers (131) arranged as a shift register (130) connected to the output of the moving object mask generator (120), each buffer configured to store a moving object mask, wherein a non-last buffer is configured to store a current frame (C);
    - a first adder (141) for combining moving object masks for at least two frames (P1, P2) which are not later in the stream than the current frame to obtain a past mask (P);
    - a second adder (142) for combining moving object masks for at least two frames (F1, F2) which are not earlier in the stream than the current frame to obtain a future mask (F);
    - an motion estimator (150) configured to estimate the speed of a moving object as a function of the area of the object on the moving object mask for the current frame (C) and the area of the object on the past mask (P) or on the future mask (F).

11. The system according to claim 10, wherein the motion estimator is further configured to estimate acceleration of the moving object as a function of the area of the object on the future mask (F) and on the past mask (F).

**Amended claims in accordance with Rule 137(2) EPC.**

1. A method for estimating dynamics of motion in a video image, comprising the steps of:

   - consecutively reading (201) source frames of the video image;
   - for each source frame, generating (202) a moving object mask, the moving object mask indicating objects which changed position between the frame and at least one previous frame;
   - selecting a current frame (C) for which motion is to be estimated;
   - combining (203) moving object masks for at least two frames (P1, P2) which are not later in the stream than the current frame to obtain a past mask (P);
   - combining (204) moving object masks for at least two frames (F1, F2) which are not earlier in the stream than the current frame to obtain a future mask (F);
   - estimating speed and acceleration of a moving object as a function of the area of the object on the moving object mask for the current frame (C) and the area of the object on the past mask (P) and on the future mask (F).

2. The method according to claim 1, wherein speed $(V_F)$ is calculated on the basis of the future mask (F) as

$$V_F = \frac{P_F - P_C}{P_C}$$

   wherein

   $P_F$ is the area of the object on a future mask F
   $P_C$ is the area of the object on a current mask C

3. The method according to claim 1 or 2, wherein speed $(V_P)$ is calculated on the basis of the past mask (P) as

$$V_P = \frac{P_P - P_C}{P_C}$$

   wherein

   $P_P$ is the area of the object on a past mask P
   $P_C$ is the area of the object on a current mask C

4. The method according to claim 1, wherein acceleration is calculated as a quotient of the area $(P_F)$ of the object on the future mask (F) and the area $(P_P)$ of the object on the past mask (P).

5. The method according to any of previous claims, wherein the speed is corrected by a correction factor $\lambda$ calculated as a quotient of the areas of the object on two consecutive frames $(P_{K+1}, P_k)$.

6. The method according to any of previous claims, wherein the speed is corrected by a proportionality coefficient ks calculated for an object moving with a known speed.

7. A computer program comprising program code means for performing all the steps of the method according to any of claims 1-6 when said program is run on a computer.

8. A computer readable medium storing computer-executable instructions performing all the steps of the method according to any of claims 1-6 when executed on a computer.

9. A system for estimating dynamics of motion in a video image, the system comprising:

   - a source signal input (110) for receiving a source video signal comprising source video frames,
   - a moving object mask generator (120) connected to the source signal input to generate a moving object mask for each source frame, the moving object mask indicating objects which changed position between the frame and at least one previous frame;
   - a series of buffers (131) arranged as a shift register (130) connected to the output of the moving object mask generator (120), each buffer configured to store a moving object mask, wherein a non-last buffer is configured to store a current frame (C);
   - a first adder (141) for combining moving object masks for at least two frames (P1, P2) which are not later in the stream than the current frame to obtain a past mask (P);

- a second adder (142) for combining moving object masks for at least two frames (F1, F2) which are not earlier in the stream than the current frame to obtain a future mask (F);
- a motion estimator (150) configured to estimate the speed and acceleration of a moving object as a function of the area of the object on the moving object mask for the current frame (C) and the area of the object on the past mask (P) and on the future mask (F).

Fig. 1

Fig. 2

P2

P1

P

C

F1

F2

F

Fig. 3

Europäisches
Patentamt
European
Patent Office
Office européen
des brevets

# EUROPEAN SEARCH REPORT

Application Number

EP 13 46 1573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TAKUMA TSUKANOME ET AL: "Measurement of heavy traffic using temporal template", INTELLIGENT TRANSPORTATION SYSTEMS (ITSC), 2012 15TH INTERNATIONAL IEEE CONFERENCE ON, IEEE, 16 September 2012 (2012-09-16), pages 1411-1416, XP032264067, DOI: 10.1109/ITSC.2012.6338735 ISBN: 978-1-4673-3064-0 * page 1411 - page 1413 * | 1-11 | INV. G06T7/20 |
| Y | US 2013/286205 A1 (OKADA YASUTAKA [JP] ET AL) 31 October 2013 (2013-10-31) * paragraph [0054] - paragraph [0087] * | 1-11 | |
| A | AT 507 457 B1 (SMARTSPECTOR ARTIFICIAL PERCEP [AT] SMARTSPECTOR ARTIFICIAL PERCEPTION) 15 January 2011 (2011-01-15) * paragraph [0049] - paragraph [0082] * | 1-11 | |

TECHNICAL FIELDS SEARCHED (IPC)

G06T
G06K
G08G

The present search report has been drawn up for all claims

| Place of search | Date of completion of the search | Examiner |
|---|---|---|
| Munich | 23 June 2014 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 46 1573

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2014

| Patent document cited in search report | | Publication date | Patent family member(s) | | Publication date |
|---|---|---|---|---|---|
| US 2013286205 | A1 | 31-10-2013 | JP 2013232091 A | | 14-11-2013 |
| | | | US 2013286205 A1 | | 31-10-2013 |
| AT 507457 | B1 | 15-01-2011 | AT 507457 A1 | | 15-05-2010 |
| | | | EP 2356627 A1 | | 17-08-2011 |
| | | | WO 2010054417 A1 | | 20-05-2010 |

EPO FORM P0459

For more details about this annex : see Official Journal of the European Patent Office, No. 12/82

EP 2 889 842 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   US 2013294643 A